(19) Europäisches Patentamt
European Patent Office
Office européen des brevets

(11) Publication number: 0 146 284 B1

(12) # EUROPEAN PATENT SPECIFICATION

(45) Date of publication of patent specification: 29.06.88

(51) Int. Cl.[4]: C 23 C 22/64, C 01 G 23/00, H 01 G 4/12

(21) Application number: 84308202.5

(22) Date of filing: 27.11.84

(54) **Methods of manufacturing dielectric metal titanates.**

(30) Priority: 29.11.83 JP 224844/83
05.12.83 JP 229721/83
19.07.84 JP 150430/84

(43) Date of publication of application:
26.06.85 Bulletin 85/26

(45) Publication of the grant of the patent:
29.06.88 Bulletin 88/26

(84) Designated Contracting States:
DE FR GB NL

(56) References cited:
EP-A-0 104 002
US-A-2 127 206
US-A-3 191 108
US-A-3 616 400
US-A-3 751 349

CHEMICAL ABSTRACTS, Vol. 74, No. 16 April 19, 1971, page 327, abstract no. 80926x, COLUMBUS, OHIO, (US). I.H. PRATT et al.: "Fabrication of rf (radio-frequency) sputtered barium titanate thin films".

(73) Proprietor: SONY CORPORATION
7-35 Kitashinagawa 6-Chome Shinagawa-ku
Tokyo 141 (JP)

(72) Inventor: Uedaira, Satoru c/o Patent Depart., Sony Corp.
7-35 Kitashinagawa-6
Shinagawa-ku, Tokyo (JP)
Inventor: Yamanoi, Hiroshi c/o Patent Depart., Sony Corp.
7-35 Kitashinagawa-6
Shinagawa-ku, Tokyo (JP)
Inventor: Tamura, Hidemasa c/o Patent Depart., Sony Corp.
7-35 Kitashinagawa-6
Shinagawa-ku, Tokyo (JP)

(74) Representative: Thomas, Christopher Hugo et al
D Young & Co 10 Staple Inn
London WC1V 7RD (GB)

(56) References cited:
GMELINS Handbuch der Anorganischen Chemie, 8th edition (1951), Volume 41, pages 433 and 458

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 146 284 B1

Courier Press, Leamington Spa, England.

**Description**

This invention relates to methods of manufacturing dielectric metal titanates.

In miniaturizing electronic components and making electronic equipment light in weight, it is particularly required to miniaturize hybrid integrated circuits, which also need to have high efficiency and be suitable for use at high frequencies. A hybrid integrated circuit may comprise resistance, capacitance, inductance and transistors. At present, the capacitance and the inductance are obstacles to the miniaturizing, and to the making of the hybrid integrated circuit light in weight. If the hybrid integrated circuit is to be usable for high frequencies, the inductance becomes small, but the problem of the capacitance remains.

A solid electrolytic capacitor or thin film capacitor used in conventional hybrid integrated circuits is formed by forming a dense and anti-corrosive oxide film on metal such as Al or Ta by anodic oxidation, and using the dielectric properties of the resulting oxide film of $Al_2O_3$ or $Ta_2O_5$.

If the dielectric constant of the oxide film is taken as $\varepsilon$, its surface area as $S(cm^2)$ and its thickness as d(cm), the capacitance C(μF) is given by the following equation:

$$C=8.855\ 10^{-8}\ \varepsilon \cdot S/d$$

To make the capacitor small in size, the surface area S and the thickness d must be restricted, and so, to obtain a large capacitance without increasing the volume, it is necessary to make the dielectric constant $\varepsilon$ large. $Al_2O_3$ and $Ta_2O_5$ mentioned above are the main materials used in practice as oxide films of high dielectric constant $\varepsilon$. Complex oxide material having higher dielectric constants $\varepsilon$ are known, for example $BaTiO_3$, $SrTiO_3$ and $Ba_{1-x}Sr_xTiO_3$. Also, it has been proposed to form thin films of such materials by sputtering. However, it is difficult to form a thin film of a desired composition by sputtering, and so this method has not been put into practice.

US patent specification US—A—3 751 349 discloses a method of manufacturing a dielectric metal titanate such as barium titanante by preparing an aqueous solution of barium hydroxide, immersing a titanium plate in the solution, and forming the barium titanate by electrolysis using the titanium plate as an electrode.

According to the present invention there is provided a method of manufacturing dielectric metal titanante $MTiO_3$ where M represents Ba; characterised by the steps of:

preparing an aqueous alkaline solution containing at least ions of barium, said solution having a $Ba^{2+}$ concentration of not less than 0.1 mol/l and a pH of not less than 12.2; and

immersing metal titanium into said solution to form said metal titanate $MTiO_3$ non-electrolytically.

According to the present invention there is also provided a method of manufacturing dielectric metal titanate $MTiO_3$ where M represents Sr; characterised by the steps of:

preparing an aqueous alkaline solution containing at least ions of strontium, said solution having an $Sr^{2+}$ concentration of not less than 0.1 mol/l and a pH of not less than 13.0; and

immersing metal titanium into said solution to form said metal titanate $MTiO_3$ non-electrolytically.

According to the present invention there is also provided a method of manufacturing dielectric metal titanate $MTiO_3$ where M represents a mixture of Ba and Sr;

characterised by the steps of:

preparing an aqueous alkaline solution containing at least ions of barium and at least ions of strontium, said solution having $Ba^{2+}$ and $Sr^{2+}$ concentrations each of not less than 0.1 mol/l and a pH of not less than 12.5; and

immersing metal titanium into said solution to form said metal titanate $MTiO_3$ non-electrolytically.

The invention will now be described by way of example with reference to the accompanying drawings, throughout which like parts are referred to by like references, and in which:

Figures 1A to 1H are diagrams showing a method of manufacturing a capacitor to which the present invention is applied;

Figure 2 is a diagram showing an X-ray diffraction pattern of $BaTiO_3$ film chemically made by a method according to the present invention;

Figure 3 is a photograph of the film made as above taken by a scanning electron microscope;

Figure 4 is a graph showing change of the composition of the above film in the depth direction;

Figure 5 is a characteristic graph showing the dependence of the film formed on the concentration of a chemical treatment solution;

Figure 6 is a characteristic graph showing the dependence of the film formed on the temperature of a chemical treatment;

Figure 7 is a characteristic graph showing a relation between a concentration of $Ba^{2+}$ and the pH value which enable a film to be formed;

Figure 8 is a characteristic graph showing the dependence of the film formed on the duration of a chemical treatment;

Figure 9 is a cross-sectional view of a capacitor to which the present invention is applied;

Figure 10 is a diagram showing an X-ray diffraction pattern of $SrTiO_3$ chemically made by a method according to the present invention;

Figure 11 is a photograph of the $SrTiO_3$ taken by a scanning electron microscope;

Figure 12 is a graph showing results of Auger electron-spectroscopy;

Figure 13 is a characteristic graph showing the dependence of the film formed on the concentration of a chemical treatment solution;

Figure 14 is a characteristic graph showing the dependence of the film formed on the temperature of a chemical treatment;

Figure 15 is a characteristic graph showing the dependence of the film formed on the duration of a chemical treatment;

Figure 16 is a diagram showing an X-ray diffraction pattern of a $Ba_{0.5}Sr_{0.5}TiO_3$ film chemically made by a method according to the present invention;

Figures 17 and 18 are photographs taken by a scanning electron microscope, illustrating the grain structure of a $Ba_{0.8}Sr_{0.2}TiO_3$ film;

Figure 19 is a graph showing measured results of the lattice constant of a film chemically made for various Ba/Sr ratios in a solution; and

Figure 20 is a graph showing measured results of the Curie temperature Tc of a film chemically made for various Sr/(Ba+Sr) ratios in a solution.

The present invention relates to methods of producing dielectric metal titanate by chemically treating metal titanium.

The metal titanate obtained by such methods is generally expressed as $MTiO_3$ where M is barium or strontium or a mixture thereof.

The chemical treatment is carried out by immersing metal titanium in a strong aqueous alkaline solution containing Ba ions and/or Sr ions at more than a predetermined concentration.

The chemical treatment is selected so as to obtain a desired metal titanate as will be described later. It is possible to convert the whole of a metal titanium thin film into metal titanate or to convert only the surface portion of this thin film into the metal titanate, so as to form a complex material of metal titanium and metal titanate.

To form a $BaTiO_3$ film, although the chemical treatment condition is determined by both the $Ba^{2+}$ concentration and the pH of an aqueous solution as shown by examples which will be mentioned later, the $Ba^{2+}$ concentration must be not less than 0.1 mol/l and the pH must be not less than 12.2. $Ba^{2+}$ is obtained from a soluble Ba salt such as $BaCl_2$, $Ba(NO_3)_2$, $BA(CH_3COO)_2$ or $Ba(OH)_2 \cdot 8H_2O$. The chemical treatment temperature is more than 20°C and the chemical treatment time is not less than 20 seconds.

To form $SrTiO_3$ film, the $Sr^{2+}$ concentration in the chemical treatment solution must be not less than 0.1 mol/l as shown by examples which will be mentioned later. The pH value of the chemical treatment solution must be not less than 13.0. $Sr^{2+}$ can be obtained from a soluble Sr salt such as SrO, $SrCl_2$, $Sr(NO_3)_2$, $Sr(CH_3COO)_2$, $Sr(OH)_2$ or $Sr(OH)_2 \cdot 8H_2O$. The chemical treatment temperature is not lower than 55°C and the chemical treatment time is more than one minute.

To form a solid solution film of $Ba_{1-x}Sr_xTiO_3$, the $Ba^{2+}$ concentration and the $Sr^{2+}$ concentration in the chemical treatment solution must each be not less than 0.1 mol/l. The pH of the chemical treatment solution is not less than 12.5, the chemical treatment temperature is not less than 55°C and the chemical treatment time is more than one minute. The $Ba^{2+}$ is obtained from a soluble Ba salt such as $BaCl_2$, $Ba(NO_3)_2$, $Ba(CH_3COO)_2$ or $Ba(OH)_2 \cdot 8H_2O$. The $Sr^{2+}$ is obtained from a soluble Sr salt such as SrO, $SrCl_2$, $Sr(NO_3)_2$, $Sr(CH_3COO)_2$, $Sr(OH)_2$ or $Sr(OH)_2 \cdot 8H_2O$.

The metal titanate so obtained by chemically treating metal titanium is of a perovskite structure which is stable in composition and formed of dense grains.

Since it is possible by such methods to form a thin film of metal titanate having a high dielectric constant and stable composition, it can be used to make a capacitor of light weight and small size of large capacitance. Moreover, it becomes possible for a capacitor of large capacitance to be incorporated integrally in an integrated circuit (IC) or a large-scaled integration circuit (LSI).

Furthermore, since the composition ratio of Sr to Ba can be controlled, it is possible to control the Curie temperature and the dielectric constant of the dielectric material thus made.

As the metal titanium layer, it is possible to use one which is obtained, for example, as follows. As shown in Figure 1A, an Au layer 2 is formed on a substrate 1 such as ceramic substrate or a glass substrate, for example, by vacuum evaporation or sputtering. Then, as shown in Figure 1B, a photo-resist (for example, trade name OMR-83, manufactured by Tokyo Ohyo Kagaku Kabushiki Kaisha) is used as a mask, and then the Au layer 2 is immersed into an etchant solution (made of 2 g of ammonium iodide, 0.3 g of iodine, 10 ml of alcohol and 15 ml of water), and partially etched and removed. Alternatively, the substrate 1 as shown in Figure 1B may be screen-printed with Au paste in a desired pattern and then subjected to heat treatment, or the Au paste may be formed on the substrate 1, for example, by mask vacuum evaporation or mask sputtering. Thereafter, as shown in Figure 1C, a metal titanium layer 3 is deposited on the substrate 1, for example, by vacuum evaporation or sputtering. Then, as shown in Figure 1D, photoresist is used as an etching mask to carry out an etching treatment to remove parts of the metal titanium layer 3 other than those on the Au layer 2, so a metal titanium layer 3 for use in a method according to the present invention is produced.

Alternatively, it is possible to obtain the metal titanium layer 3 directly, for example, by a mask-evaporation method or a mask-sputtering method.

When the metal titanium layer 3 thus made is used to make a capacitor, the substrate 1 as shown in Figure 1D is first subjected to a chemical treatment with the result that the whole of the metal titanium layer 3 is converted to a metal titanante ($MTiO_3$) layer 4 (shown in Figure 1E) or only the surface portion of the metal titanium layer 3 is converted to the metal titanate ($MTiO_3$) layer 4 (Figure 1F). Thereafter, as shown in Figure 1G, an opposing Au electrode 5 is formed on the metal titanate ($MTiO_3$) layer 4. Further, as shown in Figure 1H, an $MnO_2$ layer 6 can be formed on the metal titanate layer 4 if required.

It is possible to use a method in which a metal titanium powder 7 is partially sintered around a metal titanium rod 8 as shown in Figure 9. When such sintered metal titanium powder 7 is used to make a capacitor, the powder 7 thus sintered and the metal titanium rod 8 are subjected to the chemical treatment so as to form a metal titanate ($MTiO_3$) film. Then, an $MnO_2$ layer 9 is formed thereon if necessary. Then, after a carbon layer 10 has been formed on the $MnO_2$ layer 9, an opposing electrode 11 is formed thereon. In Figure 9, reference numeral 12 designates a casing.

The present invention will now be further described with reference to examples.

Example 1

A metal titanium plate (50 mm×20 mm×0.3 mm) which had been degreased using trichloroethylene was immersed in 4N-$HNO_3$ solution for several days, and then rinsed with water. Thereafter, the surface layer of the metal titanium plate was etched in a mixed solution having a composition of HF:15 vol%, $HNO_3$:20 vol% and $H_2O$:65 vol% at a room temperature for 30 to 60 seconds, and was then rinsed with water, to form a pretreated metal titanium plate. Then, 0.1 mol $Ba(NO_3)_2$ and 1 mol KOH were dissolved into 1000 cc of water, stirred and raised in temperature to 100°C. Thereafter, the metal titanium plate which has been subjected to the pretreatment was immersed in the solution for 30 minutes, so effecting the chemical treatment on the metal titanium plate.

The film on the surface portion of the metal titanium plate made by the above method was analyzed by X-ray diffraction analysis using a copper target and a nickel filter, and the results are indicated in Figure 2 and Table 1. From the X-ray diffraction chart, it could be confirmed that since the diffraction peaks are not split, this film was $BaTiO_3$ of cubic-system perovskite structure. Indicated in Table 1 are values of $BaTiO_3$ of a tetragonal system using ASTM card 5-0626 for reference, in which $a_0$=3.994 angstroms and $C_0$=4.038 angstroms. A stable phase of $BaTiO_3$ at room temperature is a tetragonal system which is transformed to a cubic system at a temperature exceeding 120°C. The $BaTiO_3$ obtained by the aqueous solution chemical treatment above is the cubic-system and the reason may be that the grain diameter is small, but the exact reason is still unknown.

TABLE 1

| Measured results | | | | $BaTiO_3$ (ASTM5-0626) | |
|---|---|---|---|---|---|
| 2θ | d(Å) | hkl | a(Å) | d | hkl |
| 22.14 | 4.011 | 100 | 4.011 | 4.03<br>3.99 | 001<br>100 |
| 31.45 | 2.842 | 110 | 4.019 | 2.838<br>2.825 | 101<br>110 |
| Disappeared to Ti(002) | | 111 | | 2.314 | 111 |
| 45.04 | 2.011 | 200 | 4.022 | 2.019<br>1.997 | 002<br>200 |
| 50.61 | 1.802 | 210 | 4.029 | 1.802<br>1.790 | 102<br>201 |
| 55.84 | 1.645 | 211 | 4.029 | 1.642<br>1.634 | 112<br>211 |
| 65.39 | 1.426 | 220 | 4.033 | 1.419<br>1.412 | 202<br>220 |
| 69.80 | 1.346 | 300<br>321 | 4.038 | 1.337<br>1.332 | 212<br>221 |

Regarding the {200}, the split was made narrow and the sensitivity was raised slowly, but it was not split.

Results of subjecting the film to reflection high energy electron diffraction are indicated in Table 2. In Table 2, reference numerals (1) and (2) designate films which were made by the chemical treatment carried out under the same conditions as those of this Example. According to the X-ray diffraction, it is possible to detect the substance of the film made by the chemical treatment and having a thickness of a small part of a micron. In this case, it was tried to investigate the substance having a thickness of several hundred of angstroms near the surface of the film using reflection high energy electron diffraction. The acceleration voltage was 100KV and $\lambda \cdot L=17.9$ mm angstroms.

From the reflection high energy electron diffraction pattern in Table 2, it was confirmed that the substance of the film thus chemically treated is cubic-system $BaTiO_3$.

TABLE 2

| (1) | | (2) | | $BaTiO_3$ (ASTM5-626) | | |
|---|---|---|---|---|---|---|
| r(mm) | d(Å) | r(mm) | d(Å) | d | $I/I_1$ | hkl |
| | | (4.41) | (4.06) | 4.03<br>3.99 | 12<br>25 | 001<br>100 |
| (6.33) | (2.83) | 6.29 | 2.85 | 2.838<br>2.825 | 100 | 101<br>110 |
| | | 7.69 | 2.33 | 2.314 | 46 | 111 |
| 8.98 | 1.99 | 8.90 | 2.01 | 2.019<br>1.997 | 12<br>37 | 002<br>200 |
| (9.83) | (1.82) | | | 1.802<br>1.790 | 6<br>8 | 102<br>201 |
| 10.97 | 1.63 | 10.92 | 1.64 | 1.642<br>1.634 | 15<br>35 | 112<br>211 |
| | | 12.63 | 1.42 | 1.419<br>1.412 | 12<br>10 | 202<br>220 |
| | | 14.06 | 1.27 | 1.275<br>1.264 | 5<br>7 | 103<br>301 |
| | | 14.77 | 1.21 | 1.214<br>1.205 | 3<br>5 | 113<br>311 |

Parenthesized values in Table 2 indicate substances whose strength is weak, so the accuracy is doubtful.

Figure 4 is a graph indicating results in which the film was subjected to Auger electron-spectroscopy to analyze the composition of a film. In Figure 4, respective curves A, B and C indicate changes of composition in the depth direction from the surface regarding O, Ba and Ti.

It was thus confirmed that the film chemically formed on the metal titanium plate by this Example was $BaTiO_3$.

Example 2

Firstly, metal titanium plates which had been subjected to pretreatment similar to that of Example 1 were prepared. Then, these metal titanium plates were immersed in respective solutions of $Ba(OH)_2 \cdot 8H_2O$ of various concentrations at 100°C for thirty minutes and thus subjected to the chemical treatment. The measured results of the amount of the film thus made are shown by a curve A in Figure 5. The amount of the film thus made was calculated from the diffraction peak area of {110} of an X-ray diffraction chart of a $BaTiO_3$ shown in Figure 2. Next, the concentration of $Ba(NO_3)_2$ was selected to be 0.1 mol/l and the metal titanium plate which had been subjected to the pretreatment was immersed in solutions of KOH of various concentrations at 100°C for thirty minutes and thus subjected to chemical treatment. A curve B in Figure 5 shows the measured results of the amount of the film thus made. From Figure 5, it was clear that the concentration of the single substance $Ba(OH)_2$ is preferably selected to be 0.3 mol/l, and as the concentration of $Ba(OH)_2$ is increased, the amount of the film thus made is increased. When there exists

$Ba^{2+}$ having a concentration of 0.1 mol/l if the concentration of KOH is more than 0.8 mol/l, it is possible to obtain the chemically treated film. In this case, if the concentration of KOH exceeds 1.0 mol/l, the amount of the film thus made was decreased. When the concentration of $Ba^{2+}$ is below 0.1 mol/l, the chemically treated film could not be obtained even by changing the concentration of KOH. That is, $Ba^{2+}$ at a concentration of 0.1 mol/l and KOH at a concentration of 0.8 mol/l are the lower limits of the chemical treatment conditions.

A curve A in Figure 7 indicates the measured results of the relationship between the concentration of $Ba^{2+}$ and the pH, which enable the $BaTiO_3$ film to be made. In the right-hand upper side region of the curve A made by connecting points a(12.2, 2.00), b(12.5, 0.25), c(13.0, 0.18) and d(13.9, 0.10), the $BaTiO_3$ film was made.

Figure 6 is a graph indicating the measured results of chemical treatment temperature dependence upon the $BaTiO_3$ film. In the graph of Figure 6, a curve A indicates the measured results in the case of the solution containing $Ba(NO_3)_2$ at 0.1 mol/l and KOH at 10 mol/l, a curve B indicates the measured results in the case of the solution containing $Ba(NO_3)_2$ at 0.1 mol/l and KOH at 5 mol/l, a curve C indicates the measured results in the case of the solution containing $Ba(OH)_2 \cdot 8H_3O$ at 1 mol/l, and a curve D indicates the measured results in the case of the solution containing $Ba(NO_3)_2$ at 0.1 mol/l and KOH at 1.1 mol/l. As is clear from the graph of Figure 6, until the chemical treatment temperature is 70°C, as the temperature rises, the amount of the film thus chemically made is increased, while when the temperature exceeds 70°C, the amount of the film thus made is decreased.

The measured result of the chemical treatment time dependence of the $BaTiO_3$ film is shown by a curve A in the graph of Figure 8. In this case, the $BaTiO_3$ film was made in the solution of $Ba(OH)_2 \cdot 8H_2O$ at 0.5 mol/l and at the temperature of 100°C. As is clear from the graph of Figure 8, the amount of the $BaTiO_3$ film thus made increases as the chemical treatment time increases, but tapers off.

Figure 3 is a photograph of the $BaTiO_3$ film chemically made in the $Ba(OH)_2 \cdot 8H_2O$ solution of 1 mol/l taken by a scanning electron microscope. This photograph is taken with the under portion having scratches inclined at 60°. From this photograph, it is clear that the film was formed to the bottom of the scratches. Also, this $BaTiO_3$ film is made of ball-like grains having a diameter of 1000 to 1500 angstroms.

Example 3

A metal titanium plate (50 mm×20 mm×0.3 mm) which had been degreased with trichloroethylene was immersed in 4N-$HNO_3$ solution for several days, and then rinsed with water. Thereafter, in a mixed solution containing HF:15 vol%, $HNO_3$:20 vol% and $H_2O$:65 vol%, the surface layer thereof was etched at room temperature for thirty to sixty seconds and then rised with water, to form a pretreated metal titanium plate. Then, the pretreated metal titanium plate was immersed in a solution containing $Sr(OH)_2 \cdot 8H_2O$ at 1.5 mol/l at 100°C for thirty minutes to carry out the chemical treatment.

Figure 10 and Table 3 indicate the results of analyzing the film on the surface of the metal titanium plate formed by the above treatment by X-ray diffraction using a copper target and a nickel filter. From this X-ray diffraction chart, since the diffraction peaks are not split, it was confirmed that this film was $SrTiO_3$ of cubic-system and perovskite structure. Table 3 indicates values of $SrTiO_3$ according to the ASTM card 5-0634 for reference. The stable phase of $SrTiO_3$ is cubic-system.

TABLE 3

| Measured results | | | | $SrTiO_3$ (ASTM5-0634) | |
|---|---|---|---|---|---|
| 2θ | d(Å) | hkl | a(Å) | d(Å) | hkl |
| 22.55 | 3.939 | 100 | 3.939 | 3.900 | 100 |
| 32.13 | 2.786 | 110 | 3.940 | 2.759 | 110 |
| 39.6 | 2.276 | 111 | 3.942 | 2.253 | 111 |
| 45.09 | 2.011 | 200 | 4.022 | 1.952 | 200 |
| 51.87 | 1.763 | 210 | 3.942 | 1.746 | 210 |
| 56.37 | 1.632 | 211 | 3.998 | 1.594 | 211 |
| 67.20 | 1.393 | 220 | 3.940 | 1.381 | 220 |
| 72.3 | 1.307 | 300 | 3.921 | 1.302 | 300 |

Table 4 shows the measured results in which the film was subjected to reflection high energy electron diffraction. Reference numerals (1) and (2) respectively designate films formed under the same conditions as those of this Example. By X-ray diffraction, it is possible to detect the substance of a film having a thickness of a small part of a micron. In this case, it was tried to investigate the substance having a thickness of several hundred of angstroms near the surface of the film using reflection high energy electron diffraction. The acceleration voltage was 100 KV and $\lambda \cdot L=17.9$ mm angstroms.

From the reflection high energy electron diffraction pattern in Table 4, it could be confirmed that the substance of the film was cubic-system $SrTiO_3$.

TABLE 4

| (1) | | (2) | | $SrTiO_3$ (ASTM5-0634) | | |
|---|---|---|---|---|---|---|
| r(mm) | d(Å) | r(mm) | d(Å) | d | $I/I_1$ | hkl |
| 6.44 | 2.78 | | | 2.759 | 100 | 110 |
| 7.97 | 2.25 | (7.84) | (2.28) | 2.253 | 30 | 111 |
| 9.14 | 1.96 | (9.27) | (1.93) | 1.952 | 50 | 200 |
| 11.19 | 1.60 | 11.25 | 1.59 | 1.594 | 40 | 211 |
| 12.98 | 1.38 | 13.01 | 1.38 | 1.381 | 25 | 220 |
| | | (14.50) | (1.23) | 1.235 | 15 | 310 |
| | | 15.27 | 1.17 | 1.1774 | 5 | 311 |
| | | 15.94 | 1.12 | 1.1273 | 8 | 222 |
| | | 17.23 | 1.04 | 1.0437 | 16 | 321 |

Parenthesized values in Table 4 indicate substance whose strength is weak, so the accuracy is doubtful.

Figure 12 is a graph indicating the results of subjecting the film to Auger electron-spectroscopy to analyze the composition of the film. In Figure 12, respective curves A, B and C indicate changes of composition in the depth direction from the surface regarding O, Sr and Ti.

It was thus confirmed that the film chemically made on the metal titanium plate by this Example was $SrTiO_3$.

Figure 11 is a photograph of the $SrTiO_3$ film formed in accordance with this Example taken by a scanning electron microscope. This photograph was taken with the portion having the hole in the substrate inclined at 45°. From this photograph, it is clear that the film was formed to the bottom of the scratches. Also, this $SrTiO_3$ film is made of ball-like grains having a diameter of 1000 to 3000 angstroms.

Example 4

Firstly, metal titanium plates which had been subjected to pretreatment similar to that of Example 3 were prepared. Then, each of these metal titanium plates was immersed in respective solutions of $Sr(OH)_2 \cdot 8H_2O$ of various concentrations at 100°C for thirty minutes to carry out the chemical treatment. The measured results of the amount of the film thus made are shown by a curve A in Figure 13. The amount of the film thus made was calculated from the diffraction peak area of {110} of the X-ray diffraction chart of $SrTiO_3$ as shown in Figure 10. From the graph of Figure 13, it is clear that the chemical treatment reaction becomes possible if the concentration of $Sr(OH)_2 \cdot 8H_2O$ is more than 0.09 mol/l. In practice, the concentration may be more than 0.1 mol/l and as the concentration is increased, the amount of the film thus made is increased. The pH value of the $Sr(OH)_2 \cdot 8H_2O$ having the concentration of 0.1 mol/l was 13.0.

A curve A in Figure 14 shows the measured results of chemical treatment temperature dependence for chemically making the $SrTiO_3$ film in the solution of $Sr(OH)_2 \cdot 8H_2O$ having a concentration of 0.3 mol/l. As will be clear from the graph of Figure 14, the film can be formed at a temperature of 55°C or above. Preferably, the temperature is selected to be more than 60°C. Up to about 80°C, as the temperature rises, the amount of the film thus formed is increased, while at the temperature exceeding 80°C, the amount of the film formed becomes constant.

The measured result of the chemical treatment time dependence for chemically making $SrTiO_3$ film is shown by a curve A in the graph of Figure 15. In this case, the concentration of $Sr(OH)_2 \cdot 8H_2O$ was 0.3 mol/l. As is clear from this graph, if the chemical treatment time exceeds one minute, film is made. In practice, the

chemical treatment time is more than several minutes and up to about 20 minutes. The amount of the film formed is increased up to a maximum at about 20 minutes.

Example 5

A metal titanium plate (50 mm×20 mm×0.3 mm) which had been degreased with trichloroethylene was immersed in 4N-$HNO_3$ solution and then rinsed with water. Thereafter, the surface layer thereof was etched in a mixed solution containing HF: 15 vol%, $HNO_3$: 20 vol% and $H_2O$: 65 vol% at room temperature for thirty to sixty seconds, and then rinsed with water, to form a pretreated metal titanium plate. Then, 63.12 g of $Ba(OH)_2 \cdot 8H_2O$ and 53.16 g of $Sr(OH)_2 \cdot 8H_2O$ and pure water were mixed in a beaker to provide 200 cc of solution (each having the concentration of 1 mol/l). This solution was boiled and the metal titanium plate which had been pretreated was immersed in this boiled solution for sixty minutes to carry out the chemical treatment. Thereafter, the metal plate was rinsed with water to remove the solution and then dried.

Figure 16 shows the measured results of analyzing the film formed on the surface portion of the metal titanium plate by the above treatment by X-ray diffraction using a copper target and nickel filter. From this X-ray diffraction, since the diffraction peaks are not split, it was confirmed that this film was cubic-system perovskite structure $Ba_{1-x}Sr_xTiO_3$. By fluorescent X-ray analysis, it was confirmed that the Ba:Sr:Ti ratio of this film was 1:1:2 and this film was a $Ba_{0.5}Sr_{0.5}TiO_3$ film.

Example 6

In order to obtain $Ba_{1-x}Sr_xTiO_3$ films having different Ba:Sr:Ti ratio, a metal titanium plate was immersed in 200 cc of solution containing $Ba(OH)_2 \cdot 8H_2O$ and $Sr(OH)_2 \cdot 8H_2O$ having amounts indicated on the left-hand side two columns of the following Table 5 to carry out the chemical treatment. When the films of these four kinds were subjected to X-ray fluorescent spectroscopy, it was confirmed that $Ba_{1-x}Sr_xTiO_3$ films having a Ba:Sr:Ti ratio expressed on the right-hand side of the Table 5 were formed.

TABLE 5

| | Amount of $Ba(OH)_2 \cdot 8H_2O$ | Amount of $Sr(OH)_2 \cdot 8H_2O$ | Ba:Sr:Ti |
|---|---|---|---|
| 1 | 100.96 g | 21.28 g | 4:1:5 |
| 2 | 84.12 g | 35.44 g | 2:1:3 |
| 3 | 42.04 g | 70.88 g | 1:2:3 |
| 4 | 25.24 g | 85.04 g | 1:4:5 |

Two photographs of the $Ba_{0.8}Sr_{0.2}TiO_3$ film surface formed by the solution having the ratio of Ba/Sr=4 taken by a scanning electron microscope in which its angle was changed are shown in Figures 17 and 18. From these photographs, it is clear that the chemically treated films are formed uniformly.

Figure 19 is a graph showing the result that while changing the Ba/Sr ratio in the chemical treatment solution, the lattice constant of the films thus made was measured. Figure 20 is a graph showing the measured results in which while changing the Sr/(Ba+Sr) ratio in the chemical treatment solution, the Curie temperature of the films thus made was measured.

**Claims**

1. A method of manufacturing dielectric metal titanate $MTiO_3$ where M represents Ba;
characterised by the steps of:
preparing an aqueous alkaline solution containing at least ions of barium, said solution having a $Ba^{2+}$ concentration of not less than 0.1 mol/l and a pH of not less than 12.2; and
immersing metal titanium into said solution to form said metal titanate $MTiO_3$ non-electrolytically.

2. A method of manufacturing dielectric metal titanate $MTiO_3$ where M represents Sr;
characterised by the steps of:
preparing an aqueous alkaline solution containing at least ions of strontium, said solution having an $Sr^{2+}$ concentration of not less than 0.1 mol/l and a pH of not less than 13.0; and
immersing metal titanium into said solution to form said metal titanate $MTiO_3$ non-electrolytically.

3. A method of manufacturing dielectric metal titanate $MTiO_3$ where M represents a mixture of Ba and Sr;
characterised by the steps of:
preparing an aqueous alkaline solution containing at least ions of barium and at least ions of strontium,

said solution having $Ba^{2+}$ and $Sr^{2+}$ concentrations each of not less than 0.1 mol/l and a pH of not less than 12.5; and

immersing metal titanium into said solution to form said metal titanate $MTiO_3$ non-electrolytically.

4. A method according to claim 1, claim 2 or claim 3 wherein said metal titanium is in the form of a titanium layer on a substrate; and said substrate with said metal titanium layer is immersed in said solution to convert said metal titanium layer into said dielectric metal titanate $MTiO_3$.

5. A method according to claim 1 wherein the treatment temperature of said solution is not lower than 20°C.

6. A method according to claim 2 or claim 3 wherein the treatment temperature of said solution is not lower than 55°C.

**Patentansprüche**

1. Verfahren zur Herstellung von dielektrischem Metalltitanat $MTiO_3$, worin M das Element Ba repräsentiert,

gekennzeichnet durch folgende Verfahrensschritte:

Zubereiten einer wässrigen alkalischen Lösung, die zumindest Barium-Ionen enthält und eine $Ba^{2+}$-Konzentration von nicht weniger als 0,1 Mol/l und einen pH-Wert von nicht weniger als 12,2 hat, und

Eintauchen von metallischem Titan in diese Lösung zur nichtelektrolytischen Herstellung des Metalltitanats $MTiO_3$.

2. Verfahren zur Herstellung von dielektrischem Metalltitanat $MTiO_3$, worin M das Element Sr repräsentiert,

gekennzeichnet durch folgende Verfahrensschritte:

Zubereiten einer wässrigen alkalischen Lösung, die zumindest Strontium-Ionen enthält und eine $Sr^{2+}$-Konzentration von nicht weniger als 0,1 Mol/l und einen pH-Wert von nicht weniger als 13,0 hat, und

Eintauchen von metallischem Titan in diese Lösung zur nichtelektrolytischen Herstellung des Metalltitanats $MTiO_3$.

3. Verfahren zur Herstellung von dielektrischem Metalltitanat $MTiO_3$, worin M eine Mischung aus Ba und Sr repräsentiert,

gekennzeichnet durch folgende Verfahrensschritte:

Zubereiten einer wässrigen alkalischen Lösung, die zumindest Barium-Ionen und Strontium-Ionen enthält und $Sr^{2+}$- und $Ba^{2+}$-Konzentrationen von jeweils nicht weniger als 0,1 Mol/l und einen pH-Wert von nicht weniger als 12,5 hat,

un Eintauchen von metallischem Titan in diese Lösung zur nichtelektrolytischen Herstellung des Metalltitanats $MTiO_3$.

4. Verfahren nach Anspruch 1, 2 oder 3, bei welchem das metallische Titan in Form einer Titanschicht auf einem Substrat vorliegt und das Substrat mit der metallischen Titanschicht in die genannte Lösung eingetaucht wird, um die metallische Titanschicht in das dielektrische Metalltitanat $MTiO_3$ umzuwandeln.

5. Verfahren nach Anspruch 1, bei welchem die Behandlungstemperatur der Lösung nicht kleiner ist als 20°C.

6. Verfahren nach Anspruch 2 oder 3, bei welchem die Behandlungstemperatur der Lösung nicht kleiner ist als 55°C.

**Revendications**

1. Un procédé de fabrication d'un titanate métallique diélectrique $MTiO_3$ dans lequel M représente Ba;

caractérisé par les étapes suivantes:

on prépare une solution alcaline aqueuse contenant au moins des ions baryum, ladite solution ayant une concentration en $Ba^{2+}$ de pas moins de 0,1 mol/l et un pH de pas moins de 12,2; et

on plonge du titane métallique dans ladite solution pour former ledit titanate métallique $MTiO_3$ par voie non électrolytique.

2. Un procédé de fabrication d'un titanate métallique diélectrique $MTiO_3$ dans lequel M représente Sr;

caractérisé par les étapes suivantes:

on prépare une solution alcaline aqueuse contenant au moins des ions strontium, ladite solution ayant une concentration de $Sr^{2+}$ de pas moins de 0,1 mol/l et un pH de pas moins de 13,0; et

on plonge du titane métallique dans ladite solution pour former ledit titanate métallique $MTiO_3$ par voie non électrolytique.

3. Un procédé de fabrication d'un titanate métallique diélectrique $MTiO_3$ dans lequel M représente un mélange de Ba et Sr;

caractérisé par les étapes suivantes:

on prépare une solution alcaline aqueuse contenant au moins des ions baryum et au moins des ions strontium, ladite solution ayant des concentrations de $Ba^{2+}$ et $Sr^{2+}$ de chacune pas moins de 0,1 mol/l et un pH de pas moins de 12,5; et

on plonge du titane métallique dans ladite solution pour former ledit titanate métallique $MTiO_3$ par voie non électrolytique.

4. Un procédé selon la revendication 1, 2 ou 3 dans lequel ledit titane métallique est sous forme d'une couche de titane sur un support; et

on plonge ledit support avec ladite couche de titane métallique dans ladite solution pour transformer ladite couche de titane métallique en ledit titanate métallique diélectrique $MTiO_3$.

5. Un procédé selon la revendication 1, dans lequel la température de traitement par cette solution est de pas moins de 20°C.

6. Un procédé selon la revendication 2 ou 3, dans lequel la température de traitement par cette solution est de pas moins de 55°C.

FIG. 1A

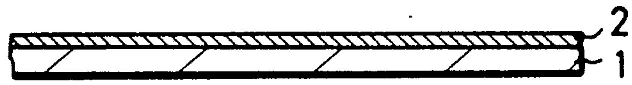


FIG. 1B

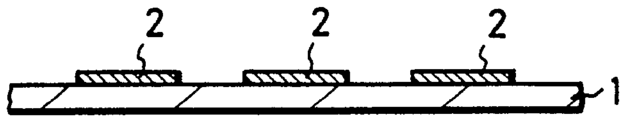


FIG. 1C

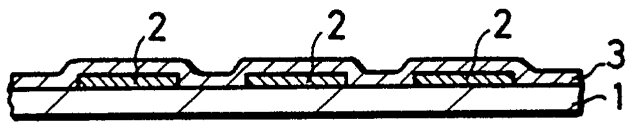


FIG. 1D

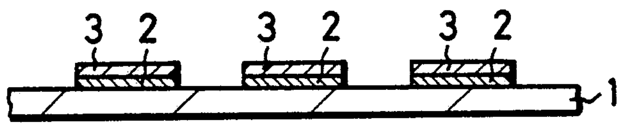


FIG. 1E

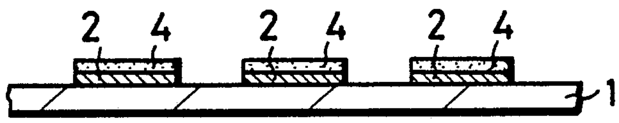


FIG. 1F

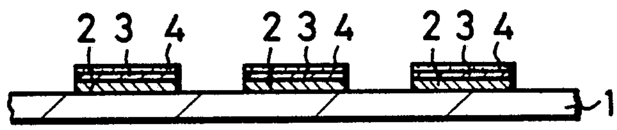


FIG. 1G

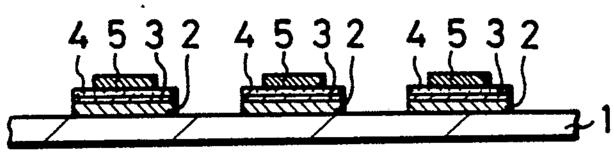


FIG. 1H

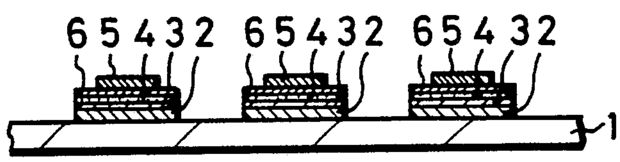

FIG. 2

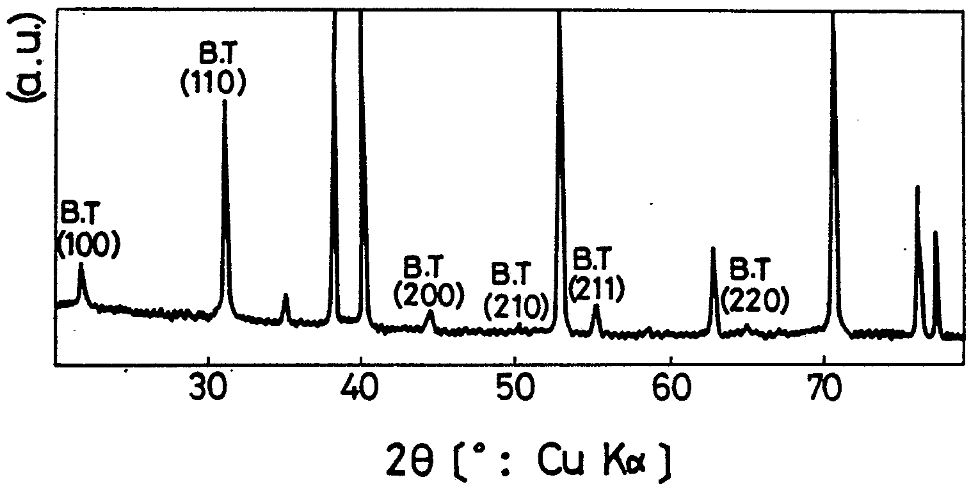


FIG. 3

(X 30,000)

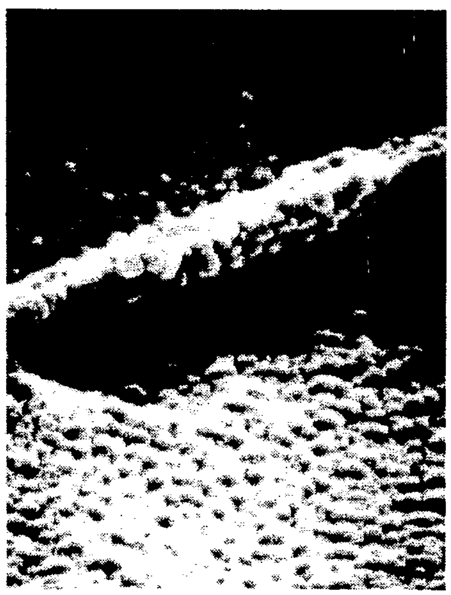

FIG. 4

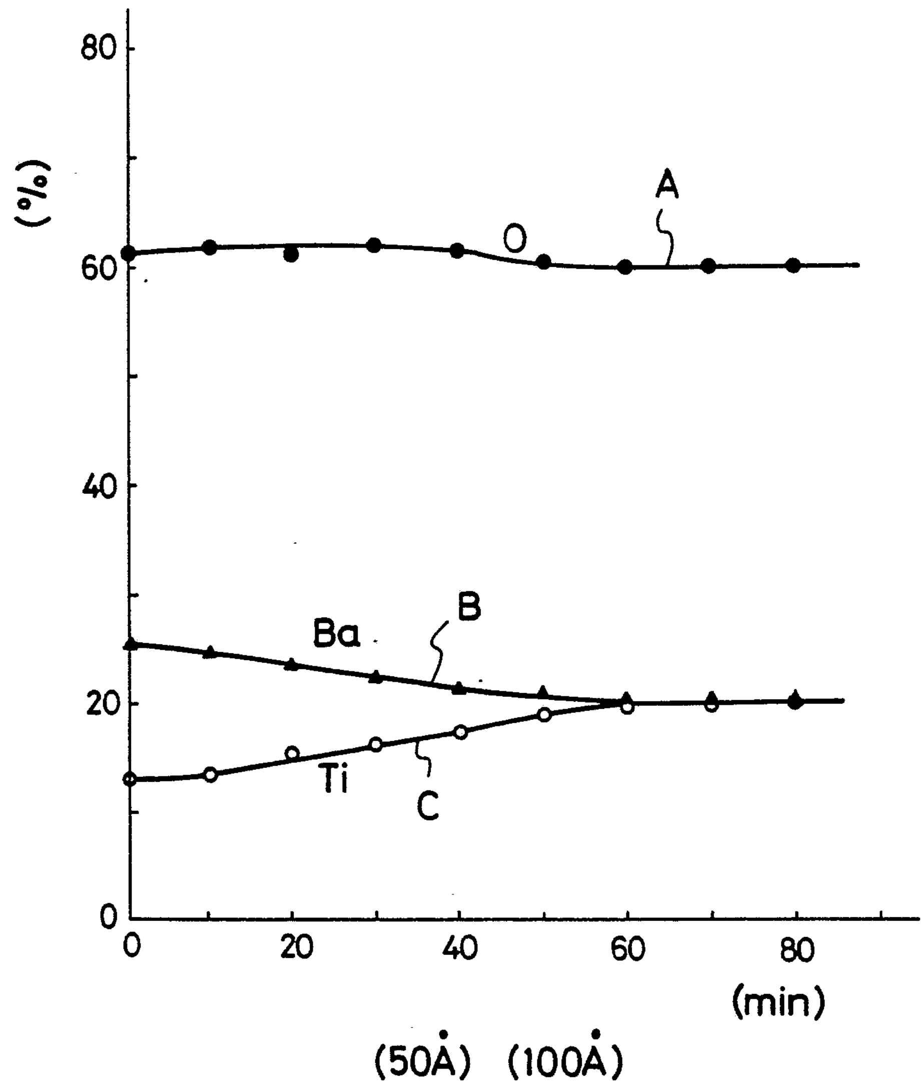

FIG. 5

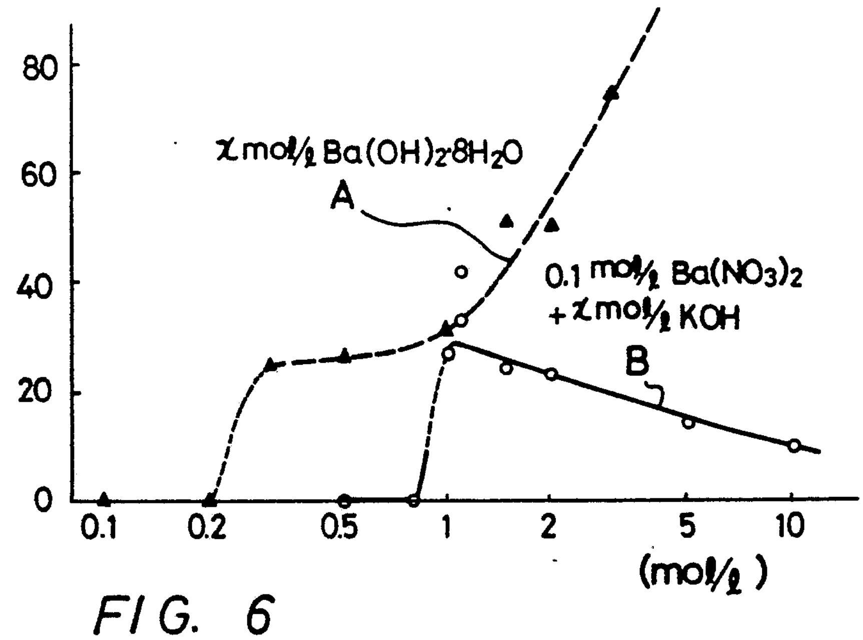
80
60
40
20
0
0.1
0.2
0.5
1
2
5
10
(mol/l)
x mol/l Ba(OH)2·8H2O
A
0.1 mol/l Ba(NO3)2
+ x mol/l KOH
B

FIG. 6

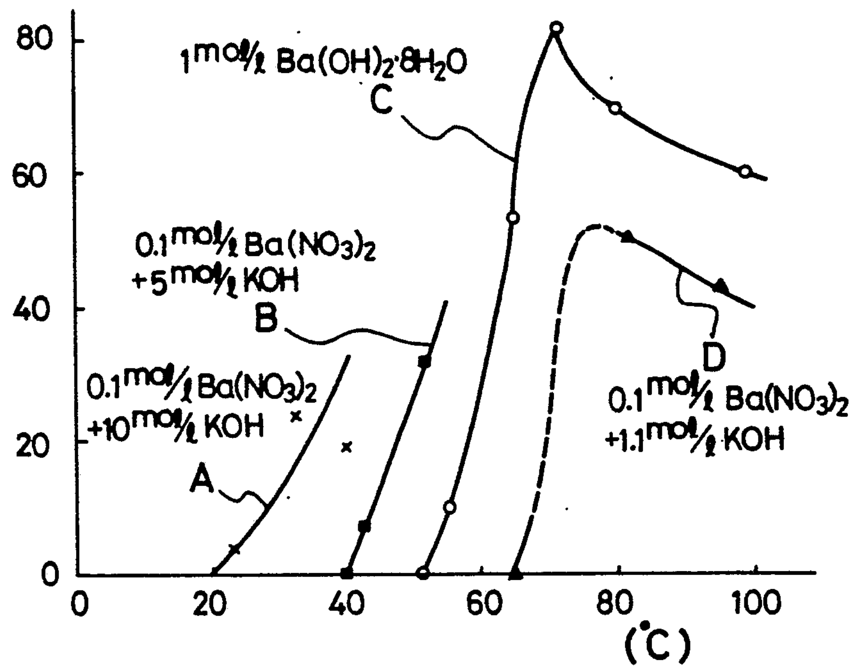
80
60
40
20
0
0
20
40
60
80
100
(°C)
1 mol/l Ba(OH)2·8H2O
C
0.1 mol/l Ba(NO3)2
+5 mol/l KOH
B
0.1 mol/l Ba(NO3)2
+10 mol/l KOH
A
D
0.1 mol/l Ba(NO3)2
+1.1 mol/l KOH

FIG. 7

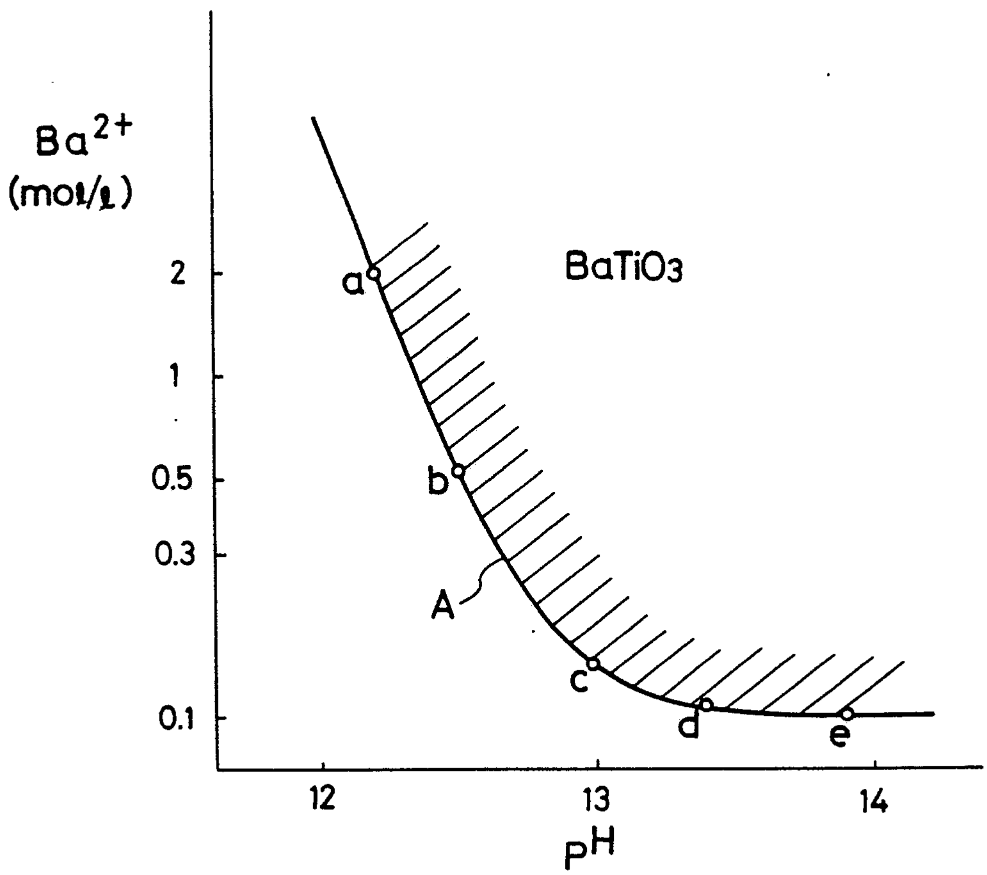

FIG. 8

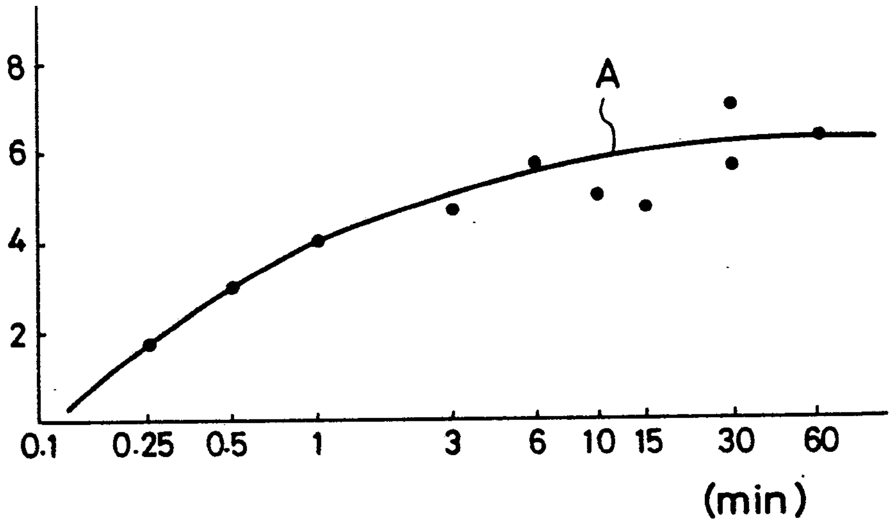


FIG. 9

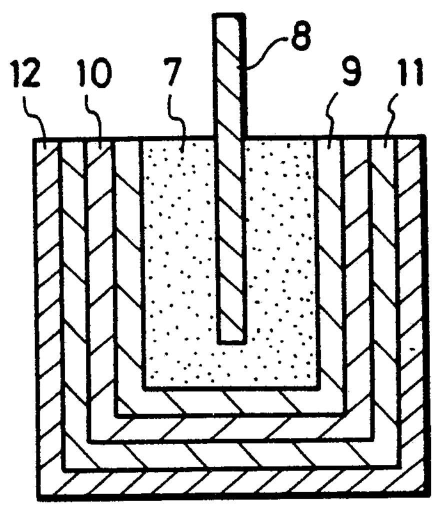

FIG. 10

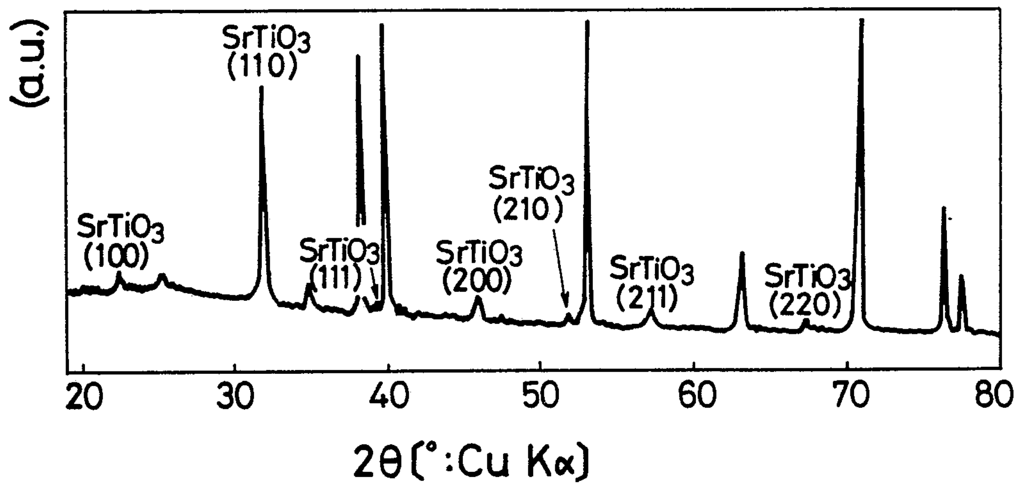


FIG. 11

(X30,000)

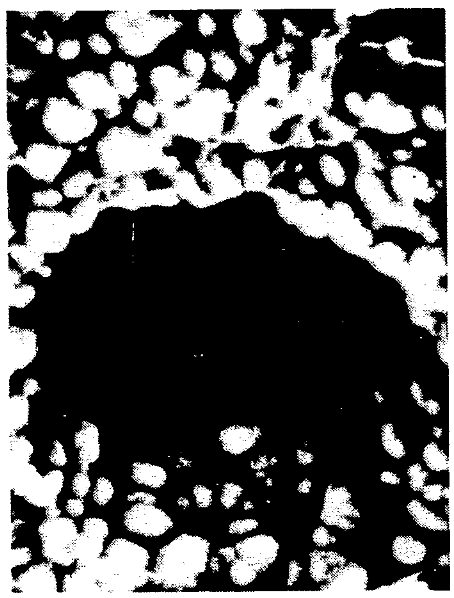

FIG. 12

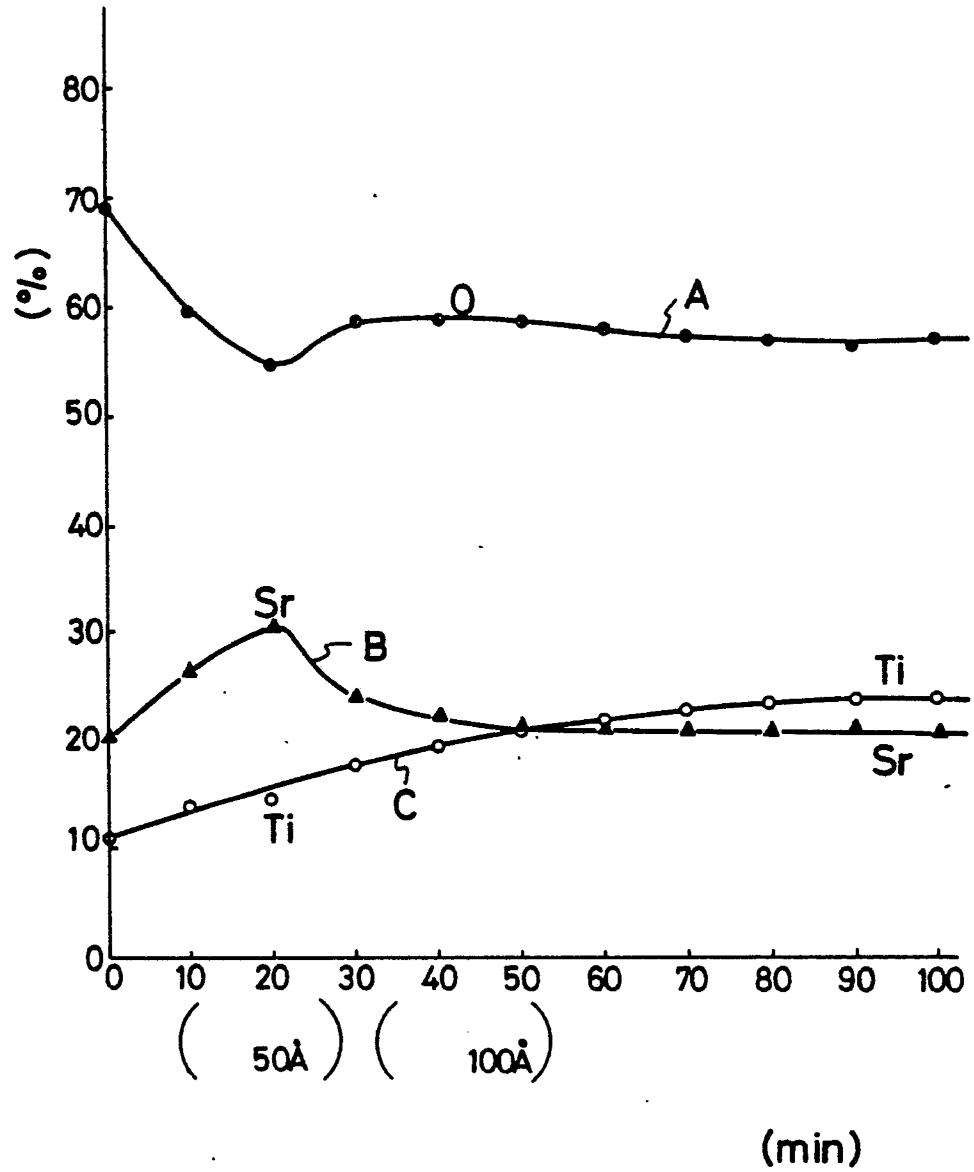
(%)
80
70
60
50
40
30
20
10
0
O
A
Sr
B
Ti
Sr
Ti
C
0
10
20
30
40
50
60
70
80
90
100
(50Å)
(100Å)
(min)

FIG. 13

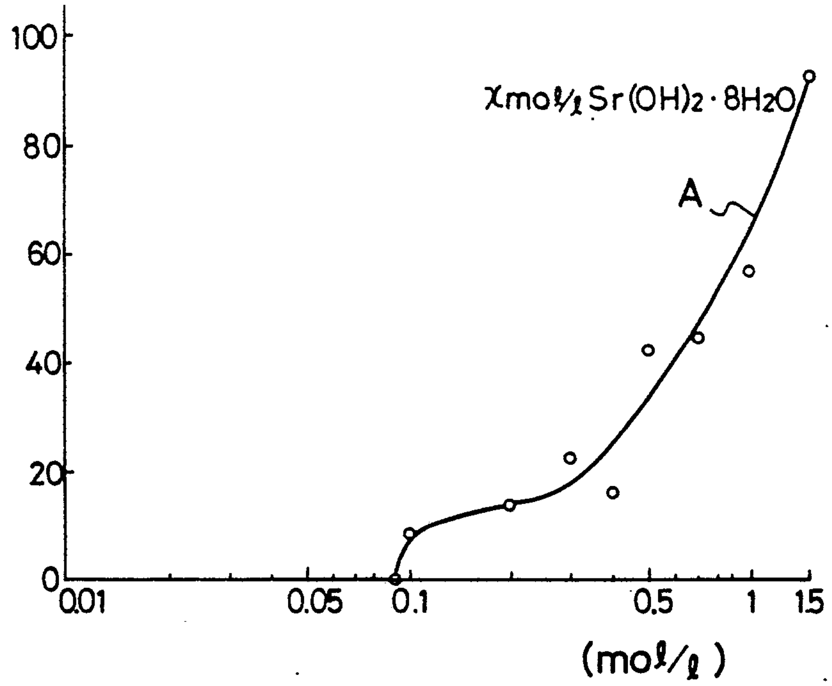
100
80
60
40
20
0
0.01
0.05
0.1
0.5
1
1.5
(mol/l)
x mol/l Sr(OH)2 · 8H2O
A

FIG. 14

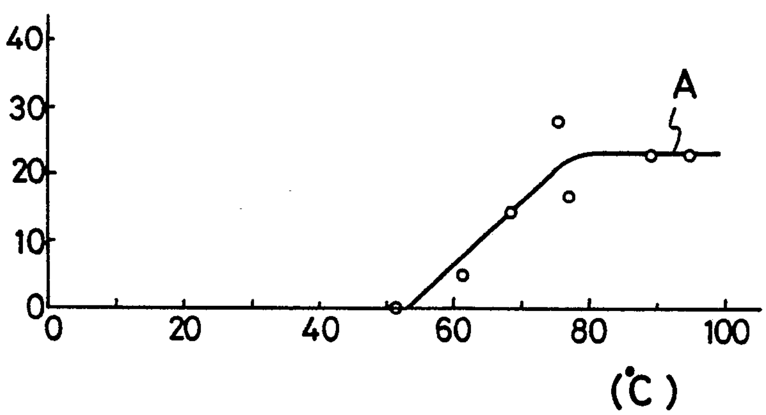
40
30
20
10
0
0
20
40
60
80
100
(°C)
A

FIG. 15

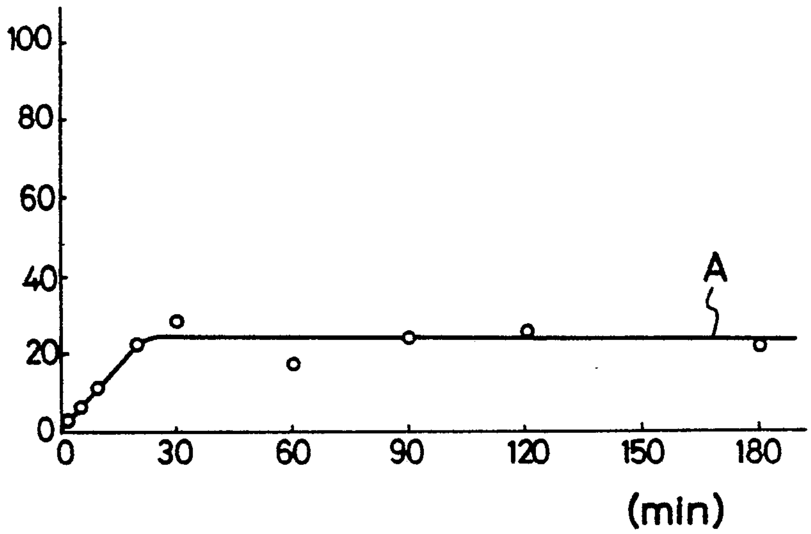
100
80
60
40
20
0
A
0
30
60
90
120
150
180
(min)

FIG. 16

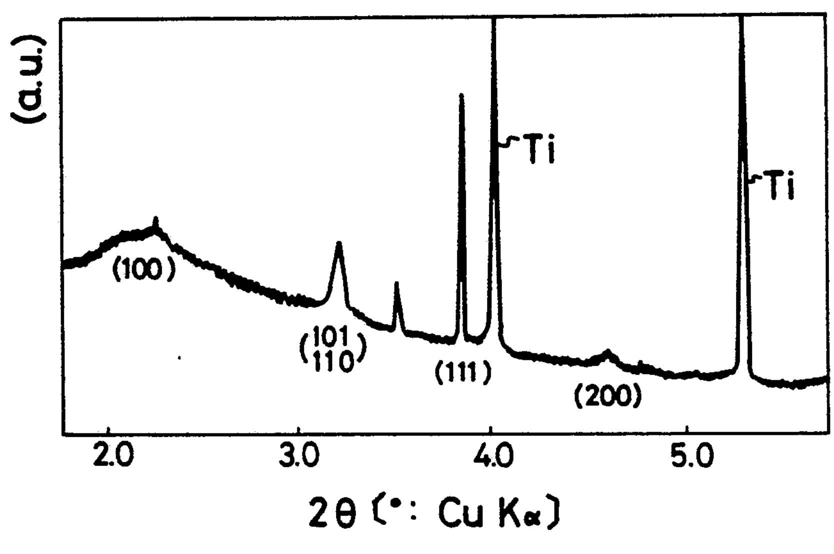
(a.u.)
Ti
Ti
(100)
(101
110)
(111)
(200)
2.0
3.0
4.0
5.0
2θ (°: Cu Kα)

FIG. 17

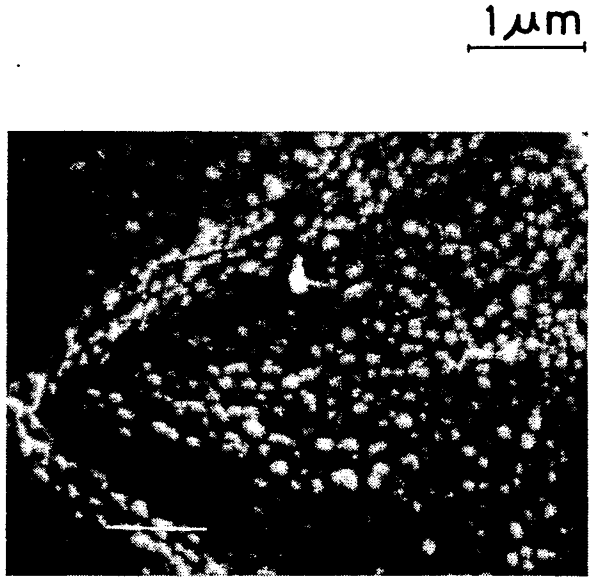


FIG. 18

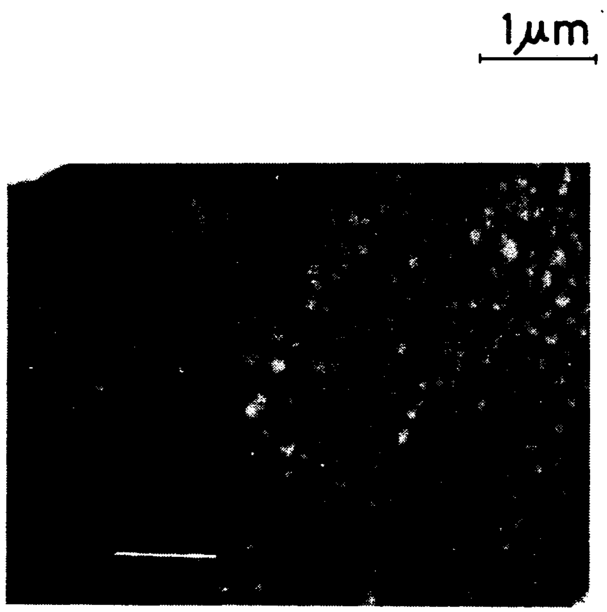

FIG. 19

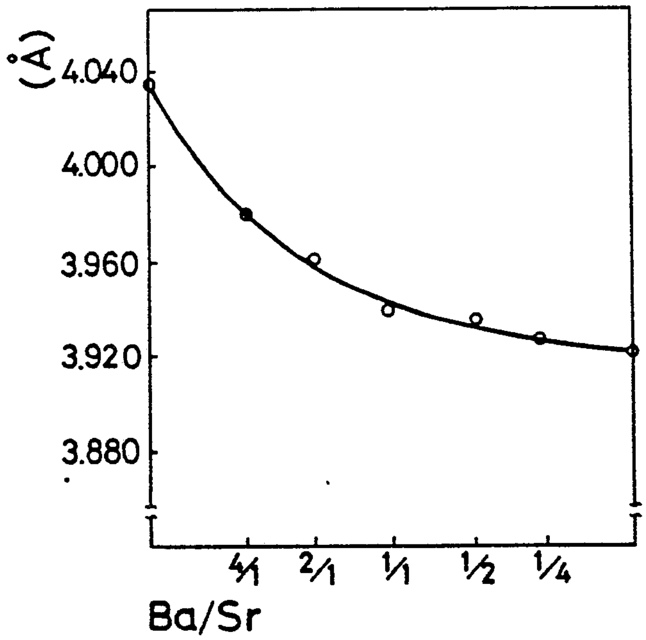
(Å)
4.040
4.000
3.960
3.920
3.880
4/1
2/1
1/1
1/2
1/4
Ba/Sr

FIG. 20

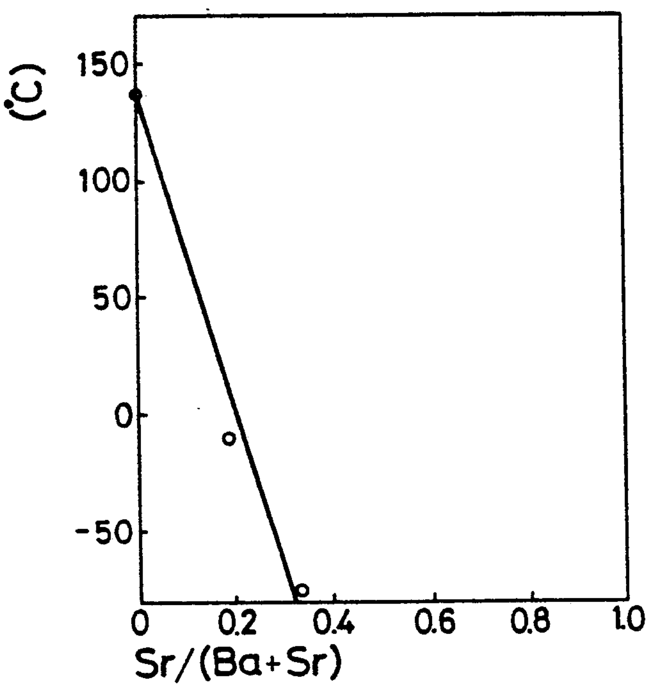
(°C)
150
100
50
0
-50
0
0.2
0.4
0.6
0.8
1.0
Sr/(Ba+Sr)